# EUROPEAN PATENT APPLICATION

(11) **EP 3 020 663 A1**
(43) Date of publication of application: **18.05.2016**
(21) Application number: 15194350.3
(22) Date of filing: 12.11.2015
(51) Int. Cl.: B65G 63/02, B65G 67/02

(54) **CROSS-DOCKING WAREHOUSE WITH LOADING BAYS**

(30) Priority: 14.11.2014 NL 2013797
(71) Applicant: TNT Holdings B.V., 2132 LS Hoofddorp (NL)
(72) Inventor: SCARDIN, Jean-Paul, 2132 LS Hoofddorp (NL)
(74) Representative: De Vries & Metman

(57) **Abstract**

Cross-docking warehouse (1, 21, 41) comprising a plurality of loading bays (6, 22, 42) for trucks and at least one longitudinal platform (14, 28, 51) with multiple docks for vans at both longitudinal sides of the platform. The platforms may for example be located in the interior of the warehouse and/or they may be exterior and in line with a port in a wall of the warehouse.

## Description

The invention relates to a cross-docking warehouse with a plurality of loading bays. The warehouse may for example be a cross-docking warehouse for transshipment of cargo, such as parcels.

Companies providing express services typically have a network of major hubs and smaller depots for collecting and redistributing parcels or similar shipments. The depots are used for collecting shipments from their respective senders and for delivery to the addressed receivers, typically short distance drives by smaller vans. At the depot the parcels are transshipped from the vans to a truck for long distance transport to a central hub. Parcels collected at a hub are subsequently redistributed to further depots, optionally via a further hub. At the final depot the parcels are transshipped from the trucks to smaller vans for final delivery.

To facilitate efficient transshipment depots are typically provided with one or more rows of loading bays for trucks and one or more rows of loading bays for vans. Such a loading bay or loading dock typically comprises a loading bay door, dock seals either side of the door and above the door, dock buffers mounted on a wall below the level of the door and a dock leveler.

Loading bays should connect to a rear end of a vehicle cargo space. For that reason they are typically at a relatively high level. The most common height is about 120-130 cm, though heights of up to 140 cm or even higher occur as well. Due to the height of such loading bay door and their relatively large number such warehouses cannot easily be used for other purposes. Consequently the buildings of the warehouses have low market value after their use as a cross docking station and depreciation amounts are high.

It is an object of the invention to provide a building useful as a cross-docking warehouse but which can easily be prepared or adapted for other uses.

The object of the invention is achieved with a cross-docking warehouse comprising a plurality of loading bays for trucks, the warehouse comprising at least one longitudinal platform with multiple docks for vans at both longitudinal sides of the platform. This way, the required number of ports for loading bays is substantially reduced. The docks around the platform can make use of the same port opening in the warehouse wall. Due to the smaller number of high level ports the building can more easily be adapted for other purposes of use. As a result the market value of the building will be higher after its economic life time as a cross-docking warehouse.

The one or more platforms can for example be located in the interior of the warehouse, the warehouse comprising at least one access opening for vans. The platform can for example be an indoor conveyer with van docks at either side of the conveyer.

Alternatively, the platforms can be exterior platforms in line with a port in a wall of the warehouse. To facilitate loading and unloading of the vans, such a platform should be at a level above its surroundings corresponding to a floor level of a vans' cargo space. The platform can for example be a concrete slab or the like, and is preferably roofed. Optionally, the platform has walls provided with loading doors for vans.

In a specific embodiment the platform may comprise a conveyer for conveying parcels into the warehouse via the port. The conveyer may for instance be a double conveyer extending along a longitudinal centerline of the platform.

The platform may for example comprise longitudinal sides both providing a row of at least 10 van docks, e.g., at least 15 van docks. Optionally, each side of the platform may provide 10 or more, or 15 or more van docks.

In a specific exemplary embodiment the warehouse may comprise at least 1 van dock per 100 m², e.g., at least 1,4 van dock per 100 m². This allows loading and unloading of a large number of vans with a compact cross-docking warehouse or depot. Since distances are short, processing speed can be high.

The platforms may for example have a width of at least 3 m, e.g., at least 9 m. This makes it possible to combine one or two parallel conveyers with sufficient working space between the vans and the conveyer.

The invention will be further explained with reference to the accompanying drawings, showing exemplary embodiments of a warehouse according to the invention.
Figure 1: shows a plan of an exemplary warehouse;
Figure 2: shows a plan of a second exemplary warehouse;
Figure 3: shows a plan of a third exemplary warehouse;
Figure 4: shows schematically in perspective view an example of a warehouse with an exterior platform;
Figure 5: shows a detail of the warehouse of Figure 4;
Figure 6: shows a further detail of the warehouse of Figure 4.

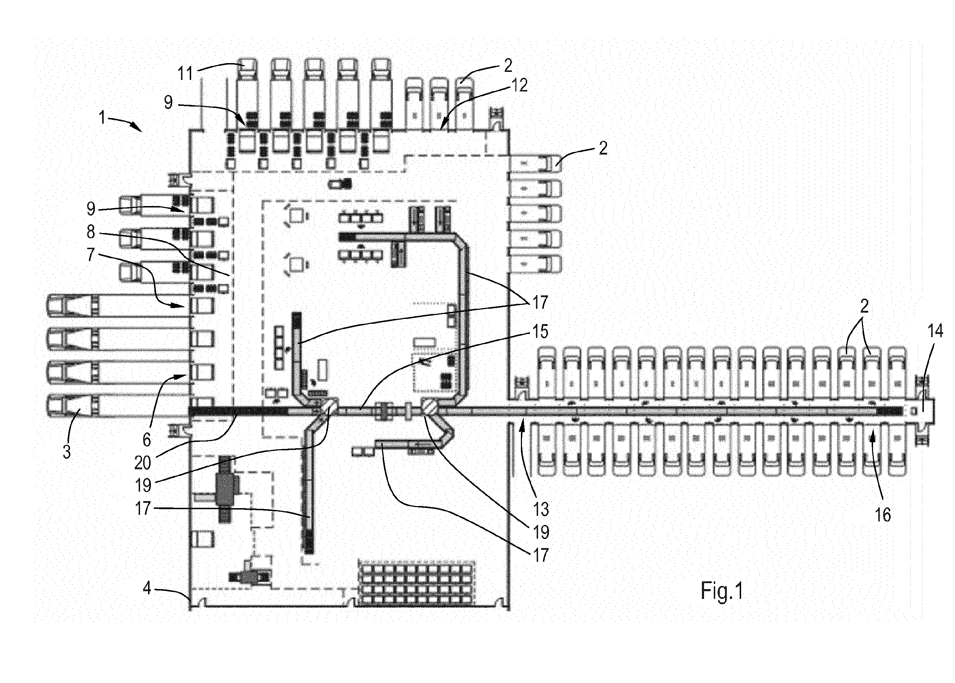

Figure 1 shows a plan view of a cross-docking warehouse or depot 1, particularly designed for express services for parcel delivery or similar shipments. At such a depot 1 smaller vans 2 or similar vehicles come to bring shipments collected from individual senders. The shipments are sorted and loaded into larger vehicles or trucks 3 for transport to larger centers for long-distance redistribution or so-called hubs, where the shipments are again sorted and cross-docked for transport to a further depot and, finally, delivery to the addressed receiver.

The depot 1 in Figure 1 comprises a building 4 with a side provided with a row of loading bays 6 for larger trucks 3. The trucks 3 are positioned with their opened rear ends against the opened loading bays 6. The trucks 3 can then be loaded and unloaded. The loading bays 6 provide direct access to the depot interior and include an opening or port 7 in the wall of the depot building 4 at a level typically about 1 - 1,5 m above ground level. The depot interior comprises a stage 8 joining the lower edge of the loading bay port 7.

In order to facilitate handling of the shipments, the loading bays 6 may be equipped with bumpers protecting the loading bay from truck damage and a dock leveler or dock lift, which is a height-adjustable platform used as a bridge between the loading bay and a truck, to be operated via mechanical, hydraulic, or pneumatic systems. To handle large sized or awkwardly sized palletized shipments a dock leveler can be used allowing shipments to be loaded and unloaded by means of power moving equipment, such as a forklift. When a truck 3 backs into a loading bay 6, the respective bumpers on the loading bay 6 and bumpers on the truck 3 come into contact. A gap may still be left between the bumpers. Also the warehouse floor and the trailer deck may not be horizontally aligned. A dock leveler can be used to bridge the gap between a truck 3 and the loading bay 6 to allow safe use of the power moving equipment.

The loading bays 6 may further comprise dock seals, for instance compressible foam blocks against which the truck 3 presses when parked. Such seals can be used to provide protection from the weather.

In the specific exemplary configuration of Figure 1 the depot 1 has four loading bays 6 for larger trucks 3 flanked by three loading bays 9 for smaller trucks 11. At a next wall, the depot 1 comprises further loading bays 9 for smaller trucks 11 and loading bays 12 for vans 2. Opposite to the loading bays 6 for the larger trucks 3 the depot 1 comprises a further row of loading bays 12 for vans 2 and a port 13 giving access to an external platform or pier 14 with multiple docks 16 for vans 2, in this example 15 docks at both longitudinal sides of the platform. This way, a relatively small depot 1 can be provided with a relatively large number of loading docks 16. Only one opening in the depot wall is needed to give access to a large number of loading docks 16. This help to reduce the number of openings in the wall, which makes it easier to sell the building after its use as a cross-docking warehouse. In the specific exemplary configuration in Figure 1, the depot comprises 1,8 van dock per 100 m² (38 van docks 12, 16 per 2166 m²).

The platform in Figure 1 comprises a concrete slab or pier with an upper surface at a level of a vans' cargo space, for example at a level of about 0,5 m or higher.

The pier carries a conveyer leading into the depot building. The width of the pier is for example 3 m or more so there is additional loading and unloading space between the van and the conveyer.

The conveyer connects to further conveyers to provide an optimized configuration for facilitating efficient unloading, sorting, redistributing and reloading of shipments.

A set of conveyers 17, e.g., 0.8 - 1.0 m wide, connect to a central line 15 by means of turntables 19.

Conveyer 20 is so-called loose loading expandable / retractable conveyer. The expandable end can be moved into a trailer to load and unload shipments. The conveyer 20 connects to the central line by means of the turntable.

Shipments are sorted for via split tables. The sorting is effected on basis of a scan of a barcode on each individual shipment. In response to a scan of the shipments' barcode a control unit controls the split table to direct the parcel into the desired direction.

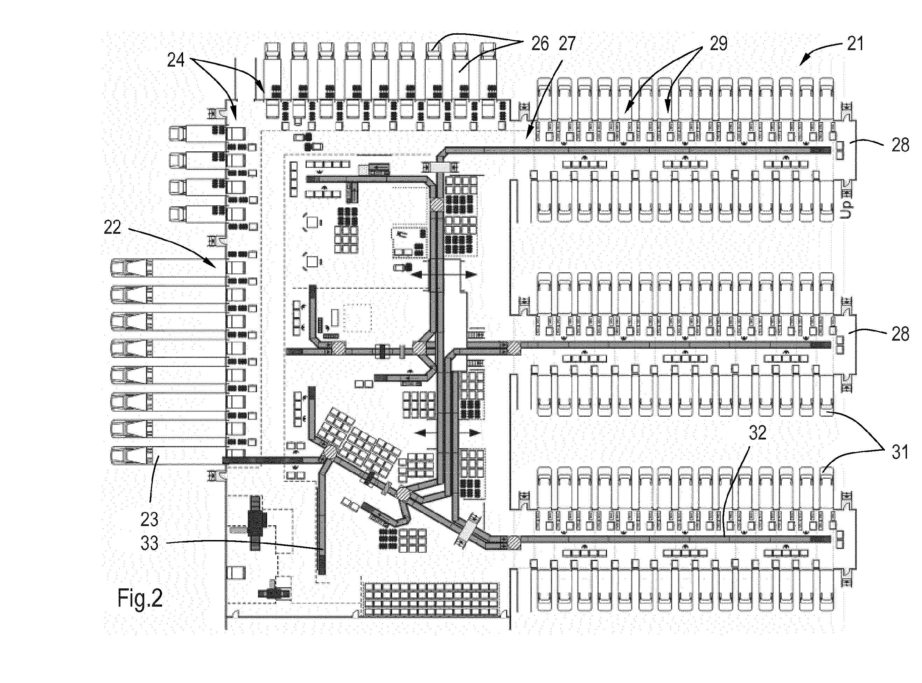

Figure 2 shows larger depot 21 with eight loading bays 22 for trucks 23 and thirteen loading bays 24 for smaller trucks 26. Opposite to the loading bays 22 for larger trucks 23, the depot wall comprises three ports 27 connecting to exterior platforms or piers 28, each with a number of docks 29 for vans 31, in this specific example fifteen docks 29 at both longitudinal sides of each platform 28. Although the surface area of the depot 21 is only about 1,5 larger than the surface area of the depot 1 of Figure 1, the number of van docks 29 is almost tripled. The platforms 28 have a width of about 9 meters and carry a conveyer 32 entering the depot building to connect to a conveyer infrastructure 33 within the depot 21 facilitating efficient unloading, sorting, transshipment and reloading of shipments. In the specific exemplary configuration in Figure 2, the depot 21 comprises 2,75 van dock per 100 m² (90 van docks per 3273 m²).

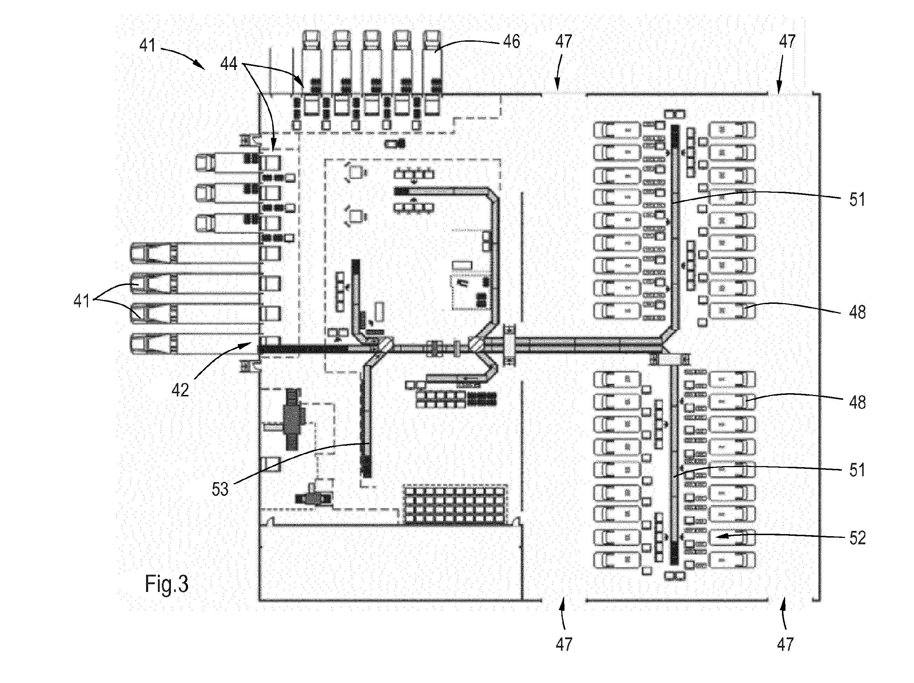

Figure 3 shows a further exemplary depot 41. This depot 41 has four loading bays 42 for larger trucks 43, eight loading bays 44 for smaller trucks 46 and four ports 47 allowing access by a van 48 to an indoor platform 49 within the interior of the depot 41. The platform 49 comprises two conveyers 51 with van docks 52 at either side of both conveyers 51, which connect to further conveyer infrastructure 53 within the depot 41.

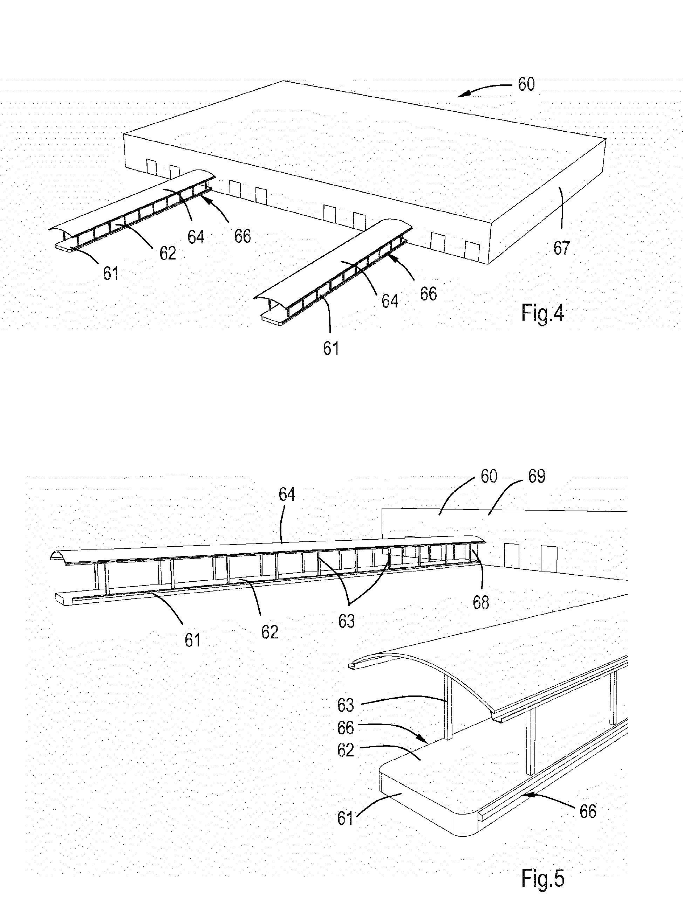

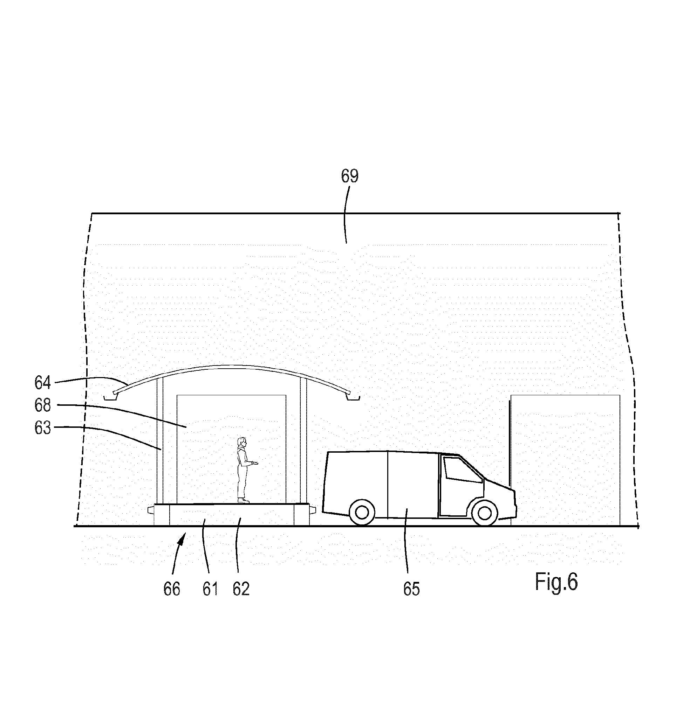

Figures 4, 5 and 6 show an embodiment of a depot 60 with external platforms 61. The platform 61 comprises a longitudinal concrete slab or pier 62 with pillars 63 carrying a roof 64. The platform 61 has longitudinal sides 66 under right angles with a depot building 67. The longitudinal sides 66 provide docks for vans 65. The platform 61 has a height at the level of a cargo space floor of a regular van 65, as shown in Figure 6. The platform 61 and the roof 64 connect to the outer wall of the building 67. The platform 61 is in line with a port 68 in the wall.

In another embodiment the platform may be provided with one or more walls, at least along the longitudinal sides, with openings forming loading docks for vans. If the platform carries a conveyer, the walls and roof protect it from weather impact.

## Claims

1. Cross-docking warehouse (1, 21, 41) comprising a plurality of loading bays (6, 22, 42) for trucks, the warehouse comprising at least one longitudinal platform (14, 28, 51) with multiple docks for vans at both longitudinal sides of the platform.

2. Warehouse according to claim 1, wherein one or more of the platforms are located in the interior of the warehouse, the warehouse having at least one port allowing access to vans.

3. Warehouse according to claim 1 or 2 wherein one or more of the platforms are exterior and in line with a port in a wall of the warehouse, the platforms being at a level above its surroundings, said level corresponding to a floor level of a vans' cargo space.

4. Warehouse according to claim 3, wherein the platform is roofed.

5. Warehouse according to claim 4, wherein the platform comprises walls with at least one of the walls being provided with loading doors for vans.

6. Warehouse according to claim 5 having rows of loading doors for vans at two opposite walls of the platform.

7. Warehouse according to any one of claims 3 - 6, the platform comprising at least one conveyer for conveying parcels into the warehouse via the port.

8. Warehouse according to claim 7 wherein the platform comprises a double conveyer extending along a longitudinal centerline of the platform.

9. Warehouse according to any preceding claim, wherein the platform comprises at least one side with at least 10 van docks, e.g., at least 15 van docks.

10. Warehouse according to any one of the preceding claims, wherein the warehouse comprises at least 1,0 van dock per 100 m², e.g., at least 1,4 van dock per 100 m².

11. Warehouse according to any preceding claim wherein the platforms have a width of at least 3 m, e.g., at least 9 m.
